Europäisches Patentamt

European Patent Office

Office européen des brevets

(19)

(11) Publication number: **0 074 796**

**B1**

(12) **EUROPEAN PATENT SPECIFICATION**

(45) Date of publication of patent specification: **18.06.86**

(51) Int. Cl.⁴: **G 11 B 5/52**, G 11 B 15/12, G 11 B 5/02

(21) Application number: **82304724.6**

(22) Date of filing: **08.09.82**

(54) Video tape recorders.

(30) Priority: **11.09.81 JP 144162/81**

(43) Date of publication of application:
**23.03.83 Bulletin 83/12**

(45) Publication of the grant of the patent:
**18.06.86 Bulletin 86/25**

(84) Designated Contracting States:
**DE FR GB NL**

(56) References cited:
**DE-A-2 027 707**
**FR-A-2 472 243**
**US-A-2 935 573**
**US-A-3 588 218**
**US-A-3 823 276**
**US-A-4 190 775**

PATENTS ABSTRACTS OF JAPAN, vol. 5, no.
175(P-88)(847), 11th November 1981

PATENTS ABSTRACTS OF JAPAN, vol. 2, no.
56, 24th April 1978, page 1492E78

(73) Proprietor: **SONY CORPORATION**
**7-35 Kitashinagawa 6-Chome Shinagawa-ku**
**Tokyo 141 (JP)**

(72) Inventor: **Ohira, Takao**
**537-5 Watauchi**
**Fujisawa-shi Kanagawa-ken (JP)**
Inventor: **Niiro, Makoto**
**2700 Kamitsuruma**
**Sagamihara-shi Kanagawa-ken (JP)**
Inventor: **Okihara, Daijiro**
**40-6 Higashitahara**
**Hadano-shi Kanagawa-ken (JP)**

(74) Representative: **Thomas, Christopher Hugo**
**et al**
**D Young & Co 10 Staple Inn**
**London WC1V 7RD (GB)**

Courier Press, Leamington Spa, England.

## Description

This invention relates to video tape recorders (VTRs).

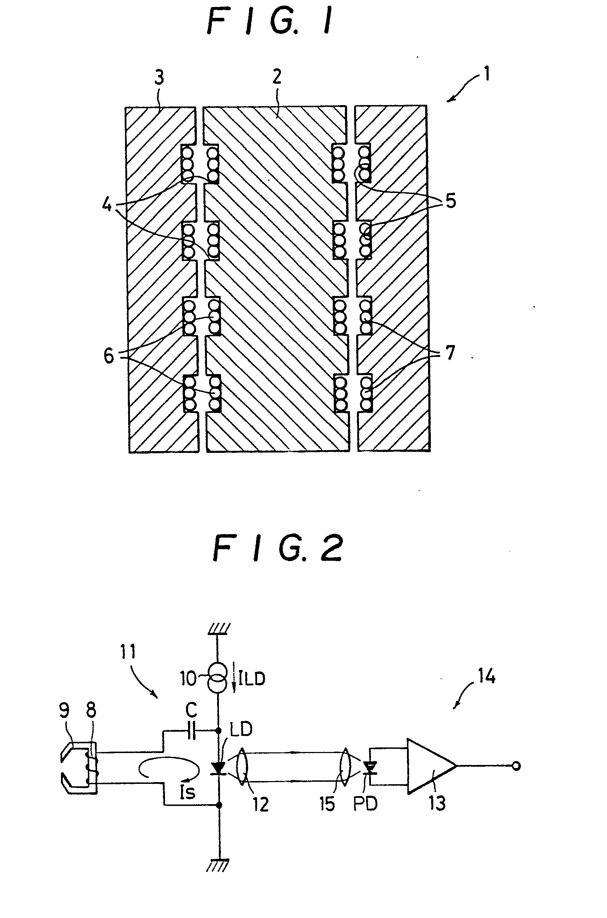

A magnetic head is mounted on a rotary drum in a known helical scan type VTR, and video signals are transmitted through a rotary transformer to and from the magnetic head. Figure 1 of the accompanying drawings shows one example of a rotary transformer 1. In the rotary transformer 1, a rotary core 3 is arranged around a stationary core 2. A plurality of grooves 4 and 5 are formed in the cores 2 and 3, respectively, facing each other. Coils 6 and 7 are mounted in the grooves 4 and 5, respectively. The rotary core 3 is fixed on the rotary drum (not shown) of the VTR, and rotates therewith. The coils 7 are connected to the magnetic heads which are mounted on the rotary drum. The coils 6 mounted in the stationary core 2 are selectively connected through a change-over switch to a recording circuit and a reproducing circuit in the VTR.

Thus, the video signals are transmitted by the rotary transformer 1 to and from the magnetic heads in the known VTR, but the following problems may arise.

(1) When signals of a plurality of channels are transmitted, the axial distances between the coils 6 and the coils 7 need to be enlarged as to avoid cross-talk between the channels. Accordingly, it is very difficult to increase the number of channels for a given size of rotary transformer.

(2) The high frequency characteristics are deteriorated due to parasitic capacitance, and the geometrical size of the rotary transformer. It is therefore difficult to transmit high speed digital signals and broad band signals.

(3) Since the rotary transformer has a resonance characteristic, the impedance matching is limited and there is little freedom of design. Even when the resonant frequency is designed to be beyond the band of signals to be transmitted, the signals to and from the magnetic head have a frequency characteristic influenced by the resonant frequency. When the frequency characteristic is not equalized, and impedance matching is not obtained, the signal-to-noise ratio is deteriorated.

It is also known that a signal can be transmitted optically to and from a rotary magnetic head using luminous diodes, as disclosed for example in Patent Abstracts of Japan, Vol. 2, No. 56, 24 April 1978, page 14 92 E 78. Moreover, it is known from US patent specification US—A—3 823 276 that mirrors and lenses can be used in an optical path in a recording and reproducing system. Also, French patent specification FR—A—2 472 243 (US—A—4 328 506) shows a laser diode used in an optical recording device to provide a writing laser beam.

According to the present invention there is provided a video tape recorder comprising:

a rotary magnetic head drum including rotary means and a magnetic head mounted on said rotary means;

a laser element mounted on said rotary means;

means for supplying a constant current to said laser element;

means for electrically connecting a coil of said magnetic head in parallel with said laser element;

photoelectric conversion means fixed in said video tape recorder; and

means for optically coupling said laser element with said photoelectric conversion means.

The invention will now be described by way of example with reference to the accompanying drawings, in which:

Figure 1 is a cross-sectional view of a rotary transformer in a known VTR;

Figure 2 is a circuit diagram of part of a first embodiment of VTR according to the invention;

Figure 3 is a graph showing the characteristic of a laser diode used in the embodiment;

Figures 4 to 6 are schematic views showing respective arrangements in an embodiment of VTR; and

Figure 7 is a circuit diagram of part of a second embodiment of VTR according to the invention and in which signals are recorded and reproduced.

In Figure 2, which shows the first embodiment, a rotational side circuit 11 mounted on a rotary drum (not shown) of the VTR, comprises a magnetic head 9, a capacitor C, a laser diode LD and a current source 10. A coil 8 is wound on the magnetic head 9, and is connected to the capacitor C and to the laser diode LD. The current source 10 supplies a constant current $I_{LD}$. A lens 12 is arranged near the laser diode LD. A photoelectric conversion element such as a photodiode PD and a reproducing amplifier 13 are arranged on a stationary part of the VTR. A lens 15 is arranged near the photodiode PD.

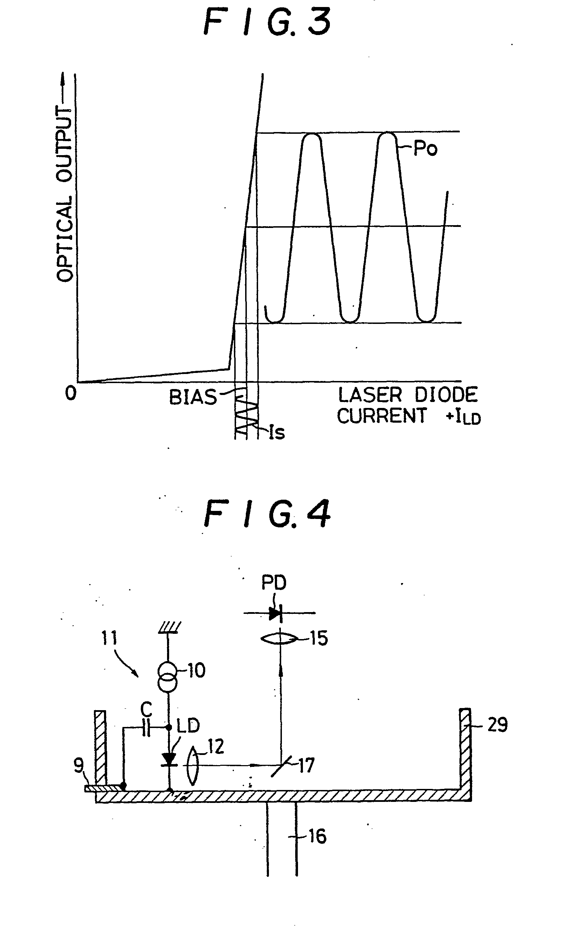

In the above-described circuit arrangement, signals are reproduced from the magnetic head 9 contacting a magnetic tape (not shown) in the reproducing mode of the VTR, when the rotary drum is rotated. A current $I_s$ of the reproduced signals flows through the loop comprising the coil 8, the capacitor C and the laser diode LD. The constant current $I_{LD}$ forms a bias current, and the signal current $I_s$ flows through the laser diode LD. As a result, an optical output $P_o$ is obtained from the laser diode LD. The relationship between the laser diode current $I_{LD}$ and the optical output $P_o$ is shown in Figure 3.

In this embodiment, AlGaAs is used for the laser diode LD. The laser diode LD emits light of wavelength 850 nm and its differential efficiency is nearly equal to 0.3 mW/mA. The output e(t) of the magnetic head 9 with an open receiving-end impedance is as follows:

$$e(t) = -\frac{d\phi}{dt} \rightarrow 2 \text{ to } 3 \text{ mV}$$

The differential resistance of the laser diode LD is several ohms, and it is negligible in comparison with the impedance of the magnetic head 9. Usually, in the output impedance

$$Z_H(\omega)=j\omega L+r(\omega)$$

of the magnetic head 9, $r(\omega)$ is approximately equal to 100 ohms, and L is approximately equal to 1 µH at a frequency of 10 MHz. Under such conditions, the signal-to-noise ratio can be calculated for the laser diode direct drive circuit of Figure 2 as follows:

$$i(\omega)=\frac{e(\omega)}{Z_H(\omega)}\text{is approximately equal to }25\ \mu A$$

(head output=3 mV)

therefore, the optical output $P_o$ is approximately equal to 0.3 (mW/mA) times 0.025 mA=0.007 mW. Generally, when the AMP constant of the 20 MHz band is considered, the signal-to-noise ratio is approximately equal to 55 dB at a receiving light level of about 6 µW to 8 µW. It can be improved by reduction of $r(\omega)$.

Figures 4 to 6 show examples of the arrangement of the circuit of Figure 2 in an actual VTR. In Figures 4 to 6, the rotational side circuit 11 is mounted on a rotary drum 29. The magnetic head 9 faces outwards. The rotary drum 29 is rotated with a shaft 16.

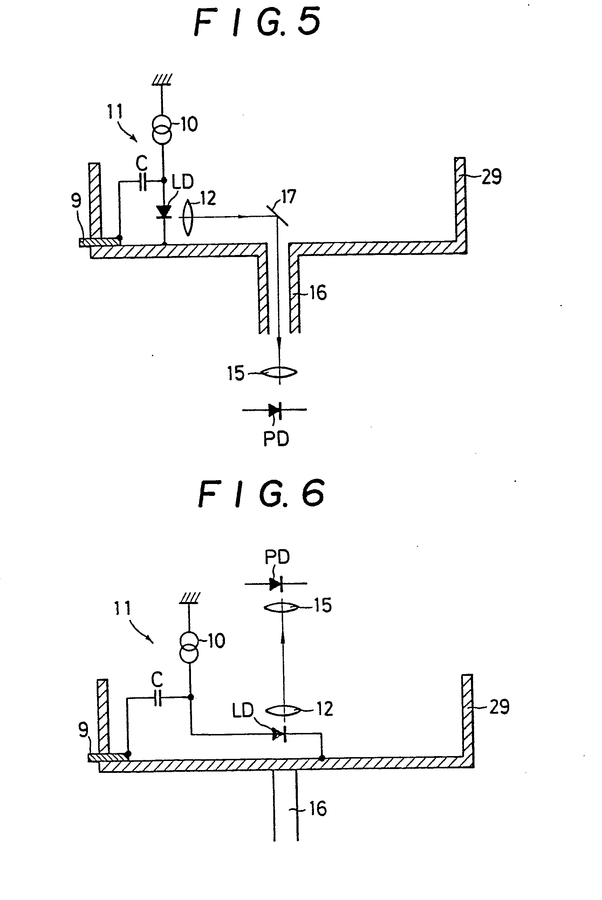

In Figures 4 and 5, the optical output of the laser diode LD passes through the lens 12, and it is reflected by a mirror 17 at a right angle. Moreover, it passes through the lens 15 of the stationary side, and reaches the photo-diode PD. The mirror 17, the lens 15 and the photo-diode PD are aligned on the central axis of the shaft 16. In Figure 5, the shaft 16 is hollow and light passes through the interior of the shaft 16.

In Figure 6, light passes from the laser diode LD, through the lenses 12 and 15 and to the photo-diode PD, which are all aligned on the central axis of the shaft 16. In Figures 4 to 6, light may be transmitted through an optical guide material such as a glass fibre between the lenses 12 and 15, and the mirror 17. The power source may be connected through a slip-ring or the like.

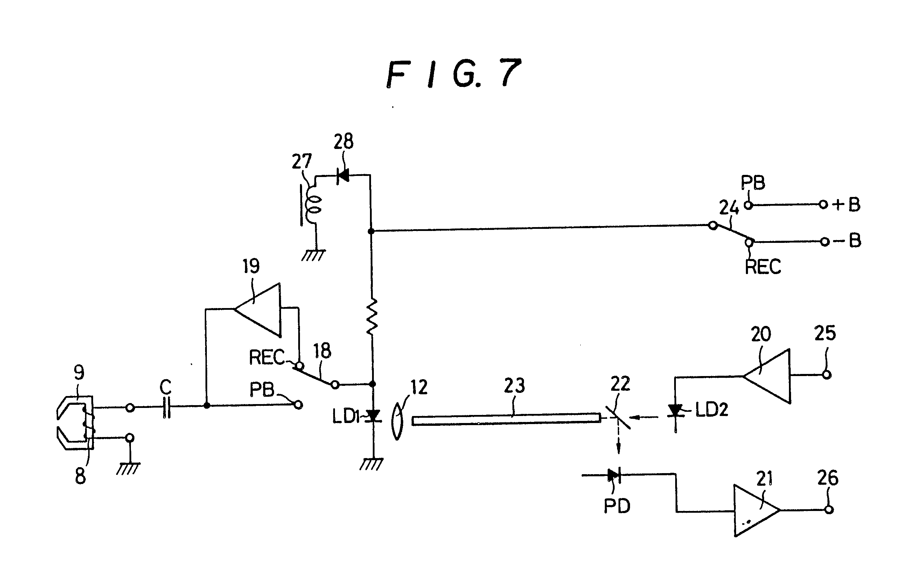

Figure 7 shows the second embodiment in which signals are recorded (REC) and reproduced (PB). Parts in Figure 7 which correspond to those in Figure 2 are denoted by the same reference numerals.

In this embodiment, a laser diode LD of the rotational side functions as a laser emitting element in the reproducing or playback mode, and it functions as a laser receiving element in the recording mode. A recording/reproducing change-over relay switch 18, an amplifier 19, a relay coil 27 for the relay switch 18 and a diode 28, are arranged at the rotational side. A recording amplifier 20, a laser diode LD2, a reproducing amplifier 21, a photo-diode PD and a half-mirror 22 are arranged at the stationary side. The rotational side and the stationary side are connected to each other through an optical guide material 23 such as an optical fibre. Power sources +B and −B for playback and recording are selectively connected through a switch 24 to the rotational side.

In the recording mode of the above described circuit, the switches 18 and 24 engage the recording contacts REC, and recording signals are supplied to the amplifier 20. The amplified recording signals from the amplifier 20 are converted into an optical output by a laser diode LD2, and the optical output it transmitted through the half-mirror 24, the optical guide material 23 and the lens 12 to the laser diode LD1 to be converted into electrical signals by the laser diode LD1. The electrical signals from the laser diode LD1 are transmitted through the switch 18 and the amplifier 19 to the magnetic head 9, and they are recorded on the magnetic tape by the magnetic head 9.

In the playback mode of the circuit of Figure 7, the switches 18 and 24 engage the playback contact PB. The reproduced signals from the magnetic head 9 are supplied through the switch 18 to the laser diode LD1, and they are converted into an optical output by the laser diode LD1. The optical output is transmitted through the optical guide material 23 and the half-mirror 22 to the photodiode PD to be converted into electrical signals by the photodiode PD. The electrical signals are amplified by the amplifier 21. The amplified electrical signals are derived from an output terminal 26.

In the embodiment of Figure 7, the laser diode LD1 is also used as a photoelectric conversion element. However a photo-diode may be separately provided in the embodiment of Figure 7. In the recording mode, the output of the photo-diode is supplied through the amplifier 19 to the magnetic head 9.

In the above-described embodiments of VTR the laser element is connected in parallel with the winding of the magnetic head mounted on the rotary member (rotary drum), and a constant current is supplied thereto. The photoelectric conversion element is arranged on the stationary part, and a light transmitting means (such as an optical guide material, a lens or a mirror) couples the laser element and the photoelectric conversion element. The reproduced signals from the magnetic head are derived from the photoelectric conversion element.

Thus, there is provided an optical rotary transformer of the laser diode direct drive type. All of the problems (1) to (3) of the conventional rotary transformer can be overcome. Signals can be reproduced and recorded with high efficiency and good signal-to-noise ratio, and without cross-talk.

## Claims

1. A video tape recorder comprising:
a rotary magnetic head drum including rotary means and a magnetic head (9) mounted on said rotary means;

a laser element (LD) mounted on said rotary means;

means (10) for supplying a constant current to said laser element (LD);

means for electrically connecting a coil (8) of said magnetic head (9) in parallel with said laser element (LD);

photoelectric conversion means (PD) fixed in said video tape recorder; and

means (12, 15) for optically coupling said laser element (LD) with said photoelectric conversion means (PD).

2. A video tape recording according to claim 1 wherein a capacitor (C) is connected in series with said coil (8).

3. A video tape recorder according to claim 1 wherein said coupling means comprises lenses (12, 15) and a mirror (17).

4. A video tape recorder according to claim 1 wherein said coupling means comprises an optical fibre (23).

5. A video tape recorder according to claim 1 further comprising a recording amplifier (20) for supplying a recording signal to said magnetic head (9), light emitting means (LD2) fixed in said video tape recorder for emitting a light corresponding to a recording signal, and means (23, 12) for optically coupling said light emitting means (LD2) with said laser element (LD1).

6. A video tape recorder according to claim 3 wherein said lenses of said coupling means comprises a first lens (12) mounted on said rotary means adjacent to said laser element (LD), said mirror (17) is mounted on said rotary means and angled to reflect a beam of light from said first lens (12) to become coaxial with the axis of rotation of said rotary body, and a second lens (15) fixed in said video tape recorder adjacent to said photoelectric conversion means. (PD).

7. A video tape recorder according to claim 6 wherein the path of said beam of light between said mirror (17) and said second lens (15) passes through an axial aperture in a hollow shaft (16) of said rotary means.

**Patentansprüche**

1. Videobandaufzeichnungsgerät
mit einer rotierenden Magnetkopftrommel mit einem auf einer rotierenden Einrichtung befestigten Magnetkopf (9) mit einem auf der rotierenden Einrichtung befestigten Laserelement (LD),

mit einer Einrichtung (10) zur Zufuhr eines Konstantstroms zum Laserelement (LD),

mit einer Einrichtung zum elektrischen Parallelschalten einer Spule (8) des Magnetkopfs (9) parallel zu dem Laserelement (LD),

mit einem photoelektrischen Wandler (PD), der an dem Videobandaufzeichnungsgerät fixiert ist, und

mit einer Einrichtung (12, 15) zum optischen Koppeln des Laserelements (LD) mit dem photoelektrischen Wandler (PD).

2. Videobandaufzeighnungsgerät nach Anspruch 1, bei dem ein Kondensator (C) mit der Spule (8) reihengeschaltet ist.

3. Videobandaufzeichnungsgerät nach Anspruch 1, bei dem die Koppeleinrichtung Linsen (12, 15) und einen Spiegel (17) aufweist.

4. Videobandaufzeichnungsgerät nach Anspruch 1, bei dem die Koppeleinrichtung eine Lichtleitfaser (23) aufweist.

5. Videobandaufzeichnungsgerät nach Anspruch 1, ferner mit einem Aufzeichnungsverstärker (20) zur Zuführung eines Aufzeichnungssignals zu dem Magnetkopf (8), einer an dem Videobandaufzeichnungsgerät befestigten lichtemittierenden Einrichtung (LD2) zum Emittieren eines einem Aufzeichnungssignal entsprechenden Lichtsignals, und einer Einrichtung (23, 12) zum optischen Koppeln der lichtemittierenden Einrichtung (LD2) mit dem Laserelement (LD1).

6. Videobandaufzeichnungsgerät nach Anspruch 3, bei dem die Linsen der Koppeleinrichtung eine erste Linse (12) aufweisen, die an der rotierenden Einrichtung in der Nähe des Laserelements (LD) befestigt ist, der Spiegel (17) an der rotierenden Einrichtung befestigt ist und eine solche Winkelstellung einnimmt, daß er einen von der ersten Linse (12) kommenden Lichtstrahl koaxial zur Rotationsachse der rotierenden Einrichtung reflektiert und eine zweite Linse (15) in dem Videobandaufzeichnungsgerät in der Nähe des photoelektrischen Wandlers (PD) befestigt ist.

7. Videobandaufzeichnungsgerät nach Anspruch 6, bei dem der Weg des Lichtstrahls zwischen dem Spiegel (17) und der zweiten Linse (15) durch eine axiale Öffnung in einer Hohlwelle (16) der rotierenden Einrichtung verläuft.

**Revendications**

1. Magnétoscope comprenant:
un tambour de tête magnétique rotatif comportant un moyen rotatif et une tête magnétique (9) montée sur ledit moyen rotatif;

un élément laser (LD) monté sur ledit moyen rotatif;

un moyen (10) servant à délivrer un courant constant audit élément laser (LD);

un moyen permettant de connecter électriquement une bobine (8) de ladite tête magnétique (9) en parallèle avec ledit élément laser (LD);

un moyen de conversion photoélectrique (PD) fixé audit magnétoscope; et

un moyen (12, 15) servant à coupler optiquement ledit élément laser (LD) avec ledit moyen de conversion photoélectrique (PD).

2. Magnétoscope selon la revendication 1, où un condensateur (C) est connecté en série avec ladite bobine (8).

3. Magnétoscope selon la revendication 1, où ledit moyen de couplage comprend des lentilles (12, 15) et un miroir (17).

4. Magnétoscope selon la revendication 1, où ledit moyen de couplage comprend une fibre optique (23).

5. Magnétoscope selon la revendication 1, comprenant en outre un amplificateur d'enregistrement (20) qui sert à délivrer un signal d'enregistrement à ladite tête magnétique (9), un moyen émetteur de lumière (LD2) fixé au magnétoscope afin d'émettre une lumière correspondant à un signal d'enregistrement, et un moyen (23, 12) servant à coupler optiquement ledit moyen émetteur de lumière (LD2) avec ledit élément laser (LD1).

6. Magnétoscope selon la revendication 3, où lesdites lentilles dudit moyen de couplage comprennent une première lentille (12) montée sur ledit moyen rotatif au voisinage dudit élément laser (LD), ledit miroir (17) est monté sur ledit moyen rotatif et fait un certain angle afin de réflechir un faisceau de lumière provenant de ladite première lentille (12) de façon qu'il devienne coaxial avec l'axe de rotation dudit corps rotatif, et une deuxième lentille (15) fixée audit magnétoscope au voisinage dudit moyen de conversion photoélectrique (PD).

7. Magnétoscope selon la revendication 6, où le trajet dudit faisceau de lumière entre ledit miroir (17) et ladite deuxième lentille (15) passe par une ouverture axiale ménagée dans un arbre creux (16) dudit moyen rotatif.

0 074 796

F I G. I

F I G. 2

1

0 074 796

# F I G. 3

# F I G. 4

# F I G. 5

# F I G. 6

F I G. 7

0 074 796